# EUROPÄISCHE PATENTSCHRIFT

(11) **EP 0 669 687 B1**
(45) Veröffentlichungstag und Bekanntmachung des Hinweises auf die Patenterteilung: **17.09.1997**
(21) Anmeldenummer: 95101262.4
(22) Anmeldetag: 31.01.1995
(51) Int. Cl.: H02G 3/04

(54) **Anschlusselement zur variablen Verlegung und zum Schutz von Leitungen**
Connecting element for variable installation and protection of cables
Pièce de connexion pour installation variable et protection de câbles

(30) Priorität: 25.02.1994 DE 4406197
(43) Veröffentlichungstag der Anmeldung: 30.08.1995
(73) Patentinhaber: Daimler-Benz Aerospace Airbus Gesellschaft mit beschränkter Haftung, 21129 Hamburg (DE)
(72) Erfinder: Kirma, Safa, D-22280 Wedel/Holstein (DE)
(74) Vertreter: Hansmann, Dierk, Dipl.-Ing.

(56) Entgegenhaltungen:
- EP-A- 0 397 062
- EP-A- 0 397 063
- DE-A- 3 210 254
- DE-C- 580 965
- DE-U- 1 828 169
- DE-U- 9 204 064
- US-A- 4 248 459

## Beschreibung

Die Erfindung bezieht sich auf ein Anschlußelement zur variablen Verlegung und zum Schutz von Leitungen mit Komponenten elektrischer Systeme, die elektrotechnische Einrichtungen und Blitzschutzsysteme in Luft- und Raumfahrzeugen miteinander verbindet. Sie ist zur Verlegung von Schutzschlauchverbindungen mit formstabilen Richtungsänderungsanteil, die isolierten elektrischen Leitungen, insbesondere Hilfs- und Steuerleitungen, schützen, in einem Flugzeug geeignet.

Anschlüsse und Verbindungen von Leitungen sind so auszuführen, daß sie allgemein den möglichen Beanspruchungen mechanischer, thermischer, elektrischer und chemischer Art standhalten. Deshalb werden isolierte elektrische Leitungen im Flugzeug an bestimmten Stellen in Schutzschläuchen verlegt, um sie gegen äußeren mechanischen Einwirkungen oder elektromagnetischen Störungen, insbesondere Überspannungen durch Blitzeinwirkungen, zu schützen. In Flugzeugen werden Schutzschlauchanschlüsse, die an eine große Anzahl möglicherweise dicht beieinander liegender elektrisch betriebener Geräte oder -gruppen mit sehr unterschiedlichen gespeisten Nutzsignalen und Störempfindlichkeiten anzuschließen sind, verlegt. Die bekannten Leitungsführungen lassen sich im Flugzeug nicht formstabil ausführen. Die Verlegung von derartigen Schutzschlauchverbindungen zwischen auf engstem Raum befindlichen Komponenten erfolgt teilweise mit Wellschläuchen, die elektrische Leitungsverbindungen gegen äußere mechanischer Einwirkungen und elektromagnetische Störungen schützen aber keine Formstabilität besitzen.

Das Anschlußelement der DE-PS 39 14 930 verbindet Metall - Wellschlauch als Abschirmschlauch in einem elektrotechnischen System, wobei die Richtungsänderung zu einer elektrischen Komponente mit zwei rechtwinkligen Halbschalen steif gemacht wird.
Dieses bekannte Anschlußelement gestattet keine Verlegung isolierten elektrischen Leitungen an eine elektrische Komponente mit biegesteifem Richtungsänderungsanteil. Der Wellschlauch besitzt nur einen wirksamen Schutz gegen äußere mechanische Einwirkungen und elektromagnetische Störungen. Das Erreichen eines biegesteifen Anteiles erfolgt mit Hilfe zusätzlicher Halbschalen, die nur für einen definierten Winkel an eine elektrische Komponente vorgesehen sind.

Aus der DE-GM 18 28 169 ist weiterhin bekannt, ein einstückig ausgebildes rohrförmiges Aufsatzstück mit Flansch auf- bzw. in einen aus Band gewickelten Metallschlauch zu schrauben bzw. hineinzuschrauben, wobei das rohrförmige Ansatzstück mit einer (sogenannten) Schraube als Innenverschraubung (direkt) an einem Aufschraubteil befestigt wird. Das rohrförmigen Ansatzstück besitzt entlang seiner Wandung entweder ein Innen- oder ein Außengewinde, mit dem der Metallschlauch sich verschrauben läßt.
Eine solche Art der Verbindung des Metallschlauches mit dem Aufschraubteil unterliegt den Nachteilen, daß sie ein ungünstiges Abschirmverhalten gegenüber äußeren elektromagnetischen Störungen aufweist, weil an dem Übergang zwischen der dem rohrförmigen Aufsatzstück und dem Metallschlauch der elektrische Übergangswiderstandswert sich nicht definieren läßt. Der Stromleitungsweg an den Übergängen: Aufschraubteil - Flansch - Schraube (Innenverschraubung) im fixierten Zustand der Teile ist nicht zuverlässig gewährleistet. Da der Metallschlauch keine formstabile Richtungsänderung zuläßt, kann die Anordnung im Flugzeugbau nicht für Verbindungen zu weiteren elektrischen und / oder mechanischen Komponenten auf engsten Raum genutzt werden. Diese Befestigungart ist wegen Nachteilen - infolge mechanischer Belastungen, beispielsweise Erschütterungen, Vibrationen oder anderer übertragener Belastungen, denen die Metallschlauchverbindungen während des Flugbetriebes unterliegen -, für den Flugzeugbau ungeeignet. Die Unterbrechung der Metallschlauchverbindung zu den einzelnen Komponenten, die in die elektrotechnische Schutzmaßnahme einbezogen sind, gefährdet außerdem die Wirksamkeit des Blitzschutzes eines Flugzeuges.

Die DE-PS 40 07 886 offenbart den bekannten Einsatz von nichtleitenden Schläuchen als Scheuerschutz. Ein Schlauch, der zusätzlich in einen Profilschlauch als Wellschlauch eingeführt wird, soll die Leitungen gegen mögliche Scheuerwirkung infolge der bereits vorher genannten äüßeren mechanischen Belastungen schützen.

Die US-A 4 248 459 offenbart einen Schlauch, der eine formstabile Richtungsänderung zuläßt.

Demgemäß liegt der Erfindung die Aufgabe zugrunde, ein gattungsgemäßes Anschlußelement derart auszubilden, daß seine Installation eine formstabile Richtungsänderung in der Verbindung zu elektrischen und / oder mechanischen Komponenten eines Flugzeuges ermöglicht. Es soll so gestaltet sein, daß seine Schlauchkomponente sich als formstabil erweist, wobei deren Verbindung mit anderen (Teil-) Komponenten des elektrotechnischen Systems den Ansprüchen der Verlegung mit variablen Richtungsänderungen und des Schutzes aufgenommener isolierter elektrischer Leitungen genügt.

Diese Aufgabe wird bei einem gattungsgemäßen Anschlußelement durch die kennzeichnenden Merkmale des Patentanspruches 1 gelöst.
Vorteilhafte Weiterbildungen der Erfindung sind in den Ansprüchen 2 bis 10 angegeben.

Eine bevorzugte Ausführungsform der Erfindung ist in den Ansprüchen 2 und 9 dargestellt.

Der Hauptvorteil des erfindungsgemäßen Anschlußelementes besteht darin, daß sich die Verlegung eines als Richtungsschlauch bezeichneten Teiles des Anschlußelementes als biegesteifer Wellschlauch auf engstem Raum realisieren läßt, ohne daß er den Schutz von in seinem Hohlraumquerschnitt verlegten isolierten elektrischen Leitungen gegen äußere mechanische Einwirkungen und elektromagnetische Störungen infolge Querschnittsverjüngung gefährdet. Dabei ist seine Verlegung zum nächsten Gerät und / oder zwischen Geräten oder Gerätegruppen innerhalb kleiner Bereiche in Geraden oder im Winkel ohne Schwächung seines Nennquerschnittes möglich. Die Biegung des Richtungsschlauches in den Winkelbereich eines Anwendungswinkels wird mit seiner mindestens einen gestauchten Zone erreicht, wodurch eine variable Verlegung des Richtungsschlauches auf engstem Raum in abgegrenztem Bereich erfolgen kann. Seine Verbindung durch Verschraubung (Auf- oder Einschraubung) mit einem nachgeordneten Anschlußschlauch, gestattet die Ausweitung der variable Verlegung und die ungehinderte Ausdehnung der Schutzmöglichkeit gegenüber installierten Leitungsbündeln.

Weitere Vorteile sind aus den Ansprüchen 2 bis 10 ersichtlich.

Nach Anspruch 3 ermöglicht der nahtlose Ansatz einer gestreckten Zone an die gestauchte Zone eine weitere Verlegung des Wellschlauches in Richtung der Mittelachse des Anschlußelementes, wobei eine beliebige Anzahl weiterer Wellschläuche so miteinander verbindbar sind.

Nach Anspruch 6 dient der Gebrauch des Wendelwellschlauches aus Kunststoff allein dem Zweck der Gewährung eines Scheuerschutzes gegenüber den im Inneren verlegten isolierten elektrischen Leitungen.

Nach Anspruch 7 wird mit der Streckung des Richtungschlauches am Ende der gestreckten Zone die Wellenteilung eines anderen Wellschlauchanschlußes mit geringerem oder größerem Durchmesser erreicht, wodurch sich dann beide miteinander verschrauben lassen.

Nach Anspruch 8 wird mit der Anformung einer glatten Buchse an das Ende der gestreckten Zone des Richtungsschlauches an seiner Manteloberfläche eine glatte Auflagefläche realisiert, mit der als Kontaktfläche geringste Übergangswiderstände erreicht werden.

Die Formung des Richtungsschlauches nach Anspruch 9 zu einem gebogenen Wellrohrstück, das die Gestalt eines Rohrkrümmers besitzt, ermöglicht die Realisierung einer rationellen Verlegetechnologie von Leitungen im Flugzeugbau.

Nach Anspruch 10 ermöglicht der Einsatz des Richtungsschlauches als Wendelwellschlauch oder Ringwellschlauch die mit ihm typische verbesserte Anwendung unterschiedlicher Verlegetechnologien im Flugzeugbau.

Die Erfindung ist anhand der Zeichnungen dargestellt und in einem Ausführungsbeispiel näher beschrieben. Es zeigen
- Fig.1: die erfindungsgemäße Anordnung mit einer gestauchten Zone des Richtungsschlauches als Wellschlauch und sein beispielgemäßer Anschluß an einem Steckverbinder;
- Fig.2: die Anordnung nach Fig.1 mit einer Modifizierung des Anschlußes am Aufschraubteil;
- Fig.3: die erfindungsgemäße Anordnung mit einer gestauchten Zone und ihr nachgeordneten gestreckten Zone sowie die Verbindung eines Wellschlauchanschlußes mit einem anderen Wellschlauch mit Metallgeflecht;
- Fig.3a: das zeichnerische Detail der Verbindung der gestreckten Zone des Wellschlauches mit dem anderen Wellschlauch nach Fig.3;
- Fig.4: die Anordnung nach Fig.3 mit einem Anschluß an einen Wellschlauch aus Kunststoff ohne Metallgeflecht.

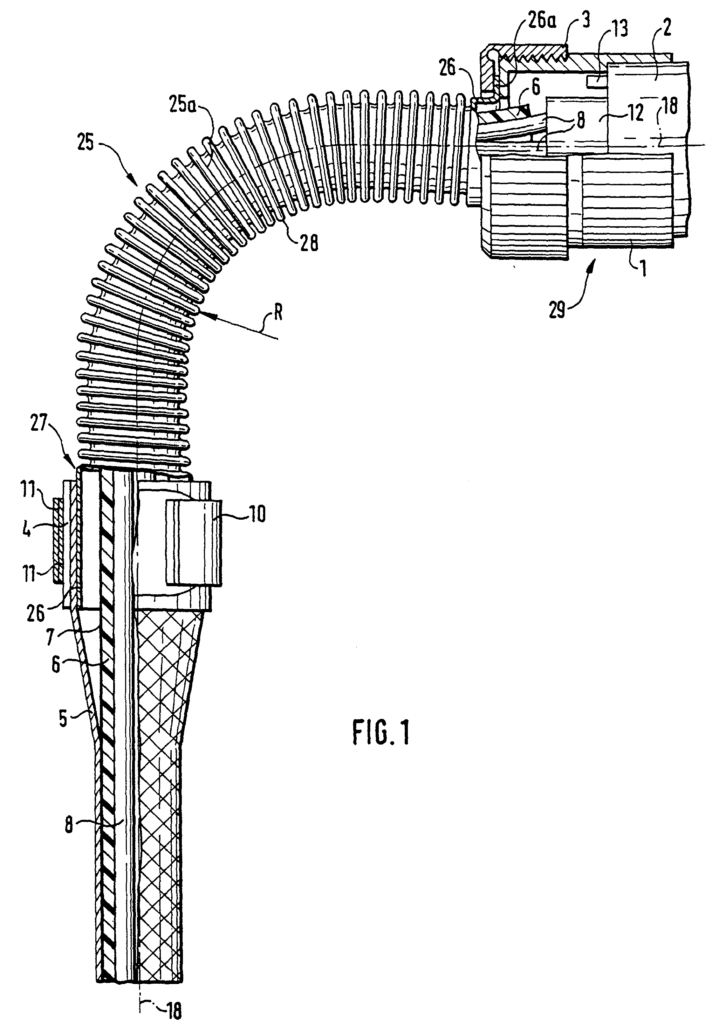

An einem Ausführungsbeispiel soll die Erfindung näher erläutert werden. In der Fig.1 ist die Anordnung in ihrem grundsätzlichen Aufbau dargestellt. Sie zeigt in ihrem grundsätzlichen Aufbau ein Anschlußelement 29 mit einem beispielgemäßen elektrischen Steckverbinder 2, das aus einem Aufschraubteil 1 mit aufschraubbarer Überwurfmutter 3 und einem Richtungsschlauch 25 besteht. Letzterer wird als biegesteifer, richtungsveränderlicher und leitfähiger Wellschlauch mittels der Überwurfmutter 3 am Aufschraubteil 1 fixiert. Er ist mit einer (nicht gezeigten) Flugzeugstruktur leitend verbunden.

Der als Richtungsschlauch 25 bezeichnete Teil des Anschlußelementes 29 ist beispielgemäß ein zur richtungsgebenden Führung angeordneter Wellschlauch. Er wird biegesteif auf engstem Raum zwischen den dicht beieinander liegenden elektrisch betriebenen Geräten oder - Gerätegruppen eines Flugzeuges verlegt und mit der Flugzeugstruktur leitend verbunden.

Unter einem biegesteifen (End-)Zustand des betreffenden Richtungsschlauches 25 wird gemeint, daß ein mechanisch (von Hand) realisierter Biegezustand bei seiner Richtungsänderung, beispielsweise durch seine (später beschriebenen) Krümmung in einen Anwendungswinkel bis zu 180 Grad, erhalten bleibt. Diese Krümmung des Schlauches soll sich während des Flugbetriebes - auch unter von außen auf den Schlauch möglicherweise einwirkenden mechanischen Belastungen, beispielsweise Erschütterungen, Vibrationen oder anderen übertragenen Belastungen, nicht verändern. Das bedeutet, daß der als Richtungsschlauch 25 bezeichnete Teil des Anschlußelementes 29 als biegesteifer Wellschlauch sich in einem biegesteifen Endzustand (nach seiner Verlegung) befindet, der sich nur durch eine weitere mechanische Biegung aus dieser Position in einen anderen Endzustand verändern läßt.

Die Fig.1 zeigt weiterhin einen geflechtartigen und elektrisch leitfähigen Schlauch 5, der einen geflechtartigen und elektrisch nicht leitfähigen Schlauch 6 aus Kunststoff umhüllt. Der Schlauch 5 wird als Metallgeflecht verlegt. Der Schlauch 6 führt in Richtung einer Mittelachse 18 des Anschlußelementes 29 isolierte elektrische Leitungen 8, insbesondere Hilfs- und Steuerleitungen. Die Leitungen 8 werden nach dem Verlassen des Kunststoffschlauchgeflechtes 6, der als Scheuerschutz gegenüber den Leitungen 8 dient, durch den Richtungsschlauch 25 bis an die (nicht gezeigten) Kontaktelemente des elektrischen Steckverbinders 2 geführt und mit diesen elektrisch leitend verbunden. Ein Spannschloß 10 mit Spannelement (Spannband) fixiert den später beschriebenen Übergang zwischen dem Richtungsschlauch 25 und dem ihm nachgeordneten Metallgeflecht 5 in geeigneter Art und Weise.
Zusätzlich soll zwischen dem Kunststoffschlauch 6 und dem Metallgeflecht 5 ein elektrisch nicht leitfähiges Fixiermittel 7 angeordnet sein, das mindestens die Leitungen 8 im Bereich des Kunststoffschlauches 6 umgibt und vorzugsweise bis in die Nähe der Kontaktelemente des Steckverbinders 2 reicht. Das Fixiermittel 7 besteht aus Kunststoff oder Gummimaterial.
Der Richtungsschlauch 25, der beispielgemäß aus einem Metall - Wellschlauch besteht, besitzt zwei glatte Anschlußenden 26. An einem Anschlußende 26 befindet sich ein Flansch 26a. Die Befestigung des Flansches 26a erfolgt am leitfähigen Aufschraubteil 1 mittels der Überwurfmutter 3, die man auf das Aufschraubteil 1 schraubt. Der stirnseitig und symmetrisch am Aufschraubteil 1 anzuordnende Flansch 26a wird durch die Überwurfmutter 3 zwischen beiden Elementen einklemmt. Damit wird eine elektrisch leitende Verbindung des Richtungsschlauches 25 zum Steckverbinder 2 über das Aufschraubteil 1 realisiert.

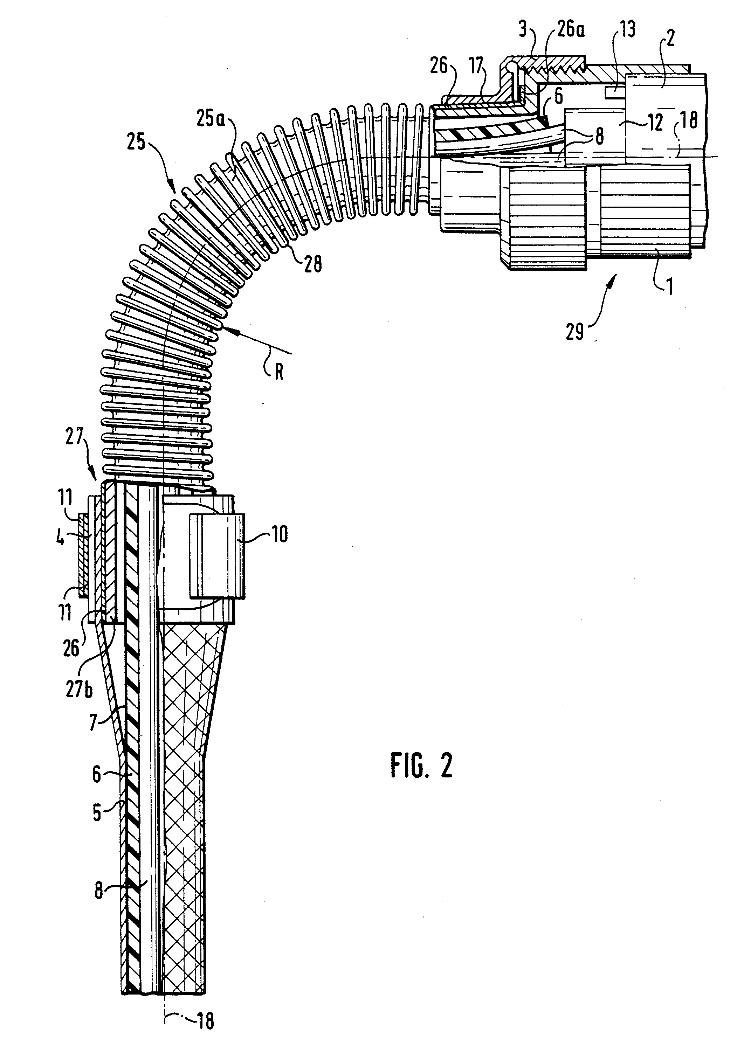

Das anderen glatte Anschlußende 26 des Wellschlauches, das sich an seinem flanschlosen Ende befindet, stellt eine glatte Buchse 27 dar. Über die Manteloberfläche dieser Buchse 27 wird in Richtung des Wellschlauches das Metallgeflecht 5 geführt, das eine im Bereich der Buchse 27 elektrisch leitfähige und geschlitzte Spannhülse 4 umgibt. Ein Spannschloß 10 fixiert diesen Teil der Anordnung mittels Spannband 11 fest.
Der Richtungsschlauch 25 wird gemäß der Anordnung nach Fig. 1 als leitfähiger Wendelwellschlauch oder Ringwellschlauch verlegt. Er läßt sich gerade und / oder im Radius R winklig verformen. Mit ihm lassen sich verschiedene Anwendungswinkel, die einen Rohrkrümmer bilden und im Winkelbereich zwischen 0 Grad und 180 Grad als auch sogar in zwei Ebenen liegen, realisieren. Man kann ihn bei einer gleichbleibender Wandstärke und einem gleichbleibendem Durchmesser und bei gleichbleibender oder veränderlicher Teilung seiner Wellung mit einer Zone gleichbleibender Wellenteilung oder mehreren Zonen unterschiedlicher Wellenteilung, wie in den nachfolgenden Ausführungen zu den Figuren 2 bis 4 beschrieben, verbinden.
Der beispielgemäße Wellschlauch besitzt mindestens eine gestauchte Zone 25a mit kleiner Wellenteilung, die eine im Radius R kreisbogenförmige Rundung 28 realisiert. Mit dieser biegsamen Zone 25a läßt sich der Wellschlauch in den genannten Winkelbereich eines Anwendungswinkels verändern. Er läßt sich gerade als auch radial biegen und stellt im biegesteifen Endzustand ein gebogenes Wellrohrstück, vorzugsweise den genannten Rohrkrümmer aus dem gebogenen Wellschlauch dar. Die Teilung des Wellschlauches und die Höhe seiner Wellen sowie seiner Wandstärke bestimmen die Biegestabilität von dem an ihn angeschlossenen Aufschraubteil 1, beispielsweise in Verbindung mit einem Steckverbinder 2. Diese Realisierungsform gestattet die Verwendung eines einzigen Anschlußelementes 29 für verschiedene Anwendungswinkel, wodurch die Verlegung derartig gestalteter Anordnungen auf engstem Raum oder in einem platzsparenden Bereich zwischen elektrisch zu versorgenden Geräten im Flugzeug möglich wird. Dadurch erfolgt eine Einsparung von Material und Gewicht, die im Flugzeugbau unerläßlich sind.

Die Anordnung nach der Fig. 2 stellt eine Modifizierung des Anschlusses des Richtungschlauches 25 als biegesteifer und richtungsveränderlicher Wellschlauch am Aufschraubteil 1 dar. Ihr Unterschied gegenüber der Anordnung nach Fig.1 besteht darin, daß sich die entlang der Mittelachse 18 angeordnete Auflagefläche des Flansches 26a dem konusförmig gestalteten Teilklemmabschnitt des Aufschraubteiles 1, auf dem die vertikale Auflage des Flansches 26 erfolgt, anpaßt.

Die Überwurfmutter 3, die den Verlauf eines Konus 17 auf ihrer inneren Mantelfläche beschreibt, welchen man dem Verlauf des genannten Teilklemmabschnittes des Aufschraubteiles 1 angepaßt, realisiert die Klemmung des Anschlußendes 26 am leitfähigen Aufschraubteil 1. Man schraubt sie auf das Aufschraubteil 1 und klemmt den glatten Teil des Flansches 26a zwischen der konischen Auflagefläche des Aufschraubteiles 1 und der konischen inneren Mantelfläche der Überwurfmutter 3 ein. Der so gestaltete Flansch 26a verhindert mit seiner Stirnfläche das Herausfallen des Richtungsschlauches 25 beim Lösen der Überwurfmutter 3. Das andere glatte Anschlußende 26 des Richtungsschlauches 25 mit der glatten Buchse 27 wird durch eine glatte Stützbuchse 27b ein- oder zweiteilig verstärkt. Durch diese Art der Gestaltung der glatten Buchse 27 mit der Stützbuchse 27b lassen sich höhere Anpreßdrücke mit dem Spannband 11 beim Fixieren des Metallgeflechtes 5 auf der glatten Buchse 27 erzeugen. Durch die höheren Anpreßdrücke werden die elektrischen Übergangswiderstände innerhalb dieses Teilbereiches der Anordnung verringert.

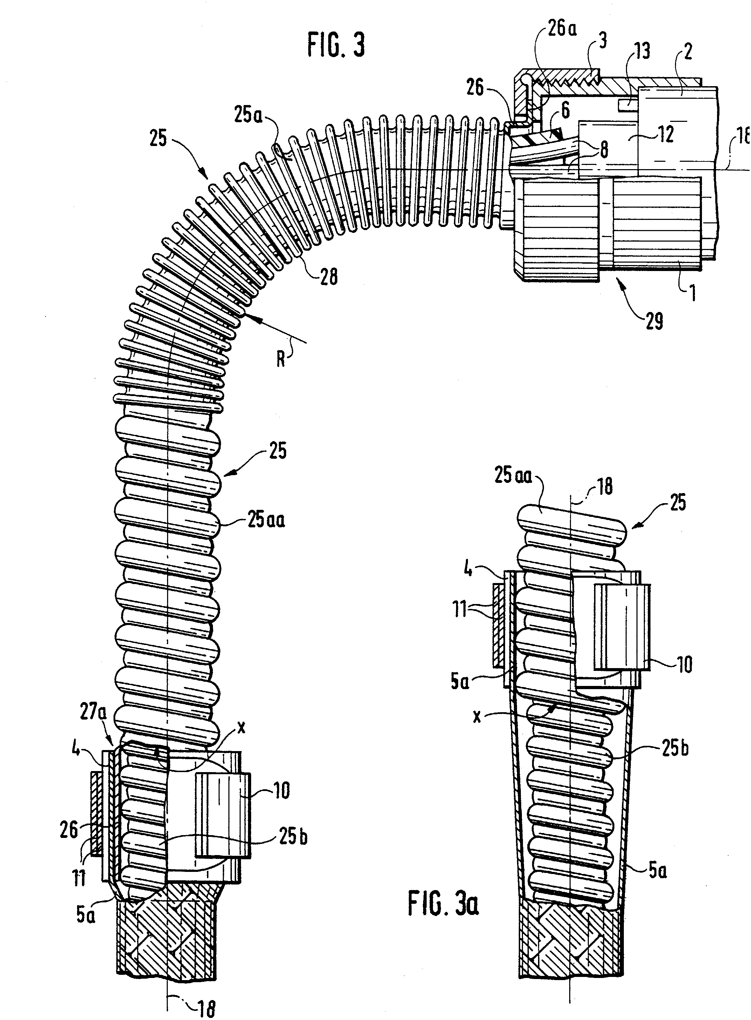

Die Fig.3 zeigt einen Richtungsschlauch 25 als biegesteifen und richtungsveränderlichen Metall - Wellschlauch, bei dem - gegenüber dem beschriebenen Wellschlauch 25 nach den Figuren 1 und 2 - zusätzlich ein weiterer Wellschlauchabschnitt mit einer gestreckten Zone 25aa angeformt wird. Beispielgemäß soll der Wellschlauch aus den zwei Zonen, der gestauchten Zone 25a und der ihr nachgeordneten gestreckten Zone 25aa, bestehen, die dann am Zonenübergang nahtlos übergehen. Dieser Wellschlauch besitzt eine gestauchte Zone 25a mit kleiner Wellenteilung auf, die im Endzustand eine biegesteife Richtungsänderung in Gestalt einer kreisförmigen Rundung 28 mit einem Radius R realisiert, mit der eine richtungsveränderliche Biegung in den Winkelbereich eines Anwendungswinkels als Rohrkrümmer erfolgt. Er besteht beispielgemäß aus der Kombination seiner gestauchten Zone 25a und der ihr nachgeordneten gestreckten Zone 25aa, die eine große Wellenteilung besitzt. Das Anschlußende der gestreckten Zone 25aa dieses Wellschlauches, das entgegen dem Anschlußende liegt, welches am Zonenübergang nahtlos mit der gestauchten Zone 25a übergeht, wird zu einer glatten Buchse 27a geformt.
Das Formen dieses Wellschlauchendes zu einer glatten Buchse 27a an diesem Ende der gestreckten Zone 25aa wäre eine weitere Realisierungsmöglichkeit. Die Zone 25aa besitzt eine Streckung, mit der die gleiche Wellenteilung eines anderen Wellschlauches 25b, der mit ihr innerhalb ihres kreisflächigen Hohlraumquerschnittes an der Verbundstelle x verschraubbar sein soll, erreicht wird.

Letzterer wird vorzugsweise als Wendelwellschlauch im Bereich der Verbundstelle x am anderen freien Anschlußende innerhalb des kreisflächigen Hohlraumquerschnittes des Wellschlauches eingeschraubt oder außerhalb des kreisförmigen Querschnittes des Wellschlauches auf dessen Mantelfläche aufgeschraubt. Der andere Wellschlauch 25b besteht vorzugsweise aus Kunststoff und wird zum Schutz der Leitungen 8 als Scheuerschutz genutzt. Über den Teil der Manteloberfläche des anderen Wellschlauches 25b, der nicht in die gestreckte Zone 25aa des leitfähigen Wellschlauches 25 eingeschraubt wird, befindet sich innerhalb eines Fixierbereiches die glatte Buchse 27a. Auf ihr wird das den Kunststoffschlauch 25b zusätzlich umhüllende Metallgeflecht 5a geschoben. Das Fixieren dieses Teiles der Anordnung erfolgt mit der geschlitzten Spannhülse 4 . Die Befestigung der Teilanordnung geschieht mittels Spannschloß 10 durch Spannband 11. Am gebogenen biegefesten und richtungsveränderlichen Teil mit der Rundung 28 ist der Wellschlauch zusammengestaucht. Dadurch läßt er sich in einen biegefesten Endzustand verformen.

Fig.3a zeigt zum Unterschied der Lösung nach Fig.3 die Ausbildung der gestreckten Zone 25aa ohne die glatte Buchse 27a. Das Metallgeflecht 5b wird direkt auf diesen Zonenbereich 25aa des Wellschlauches geschoben und mit der Spannhülse 4 fixiert sowie mit dem Spannschloß 10 mittels Spannband 11 befestigt.

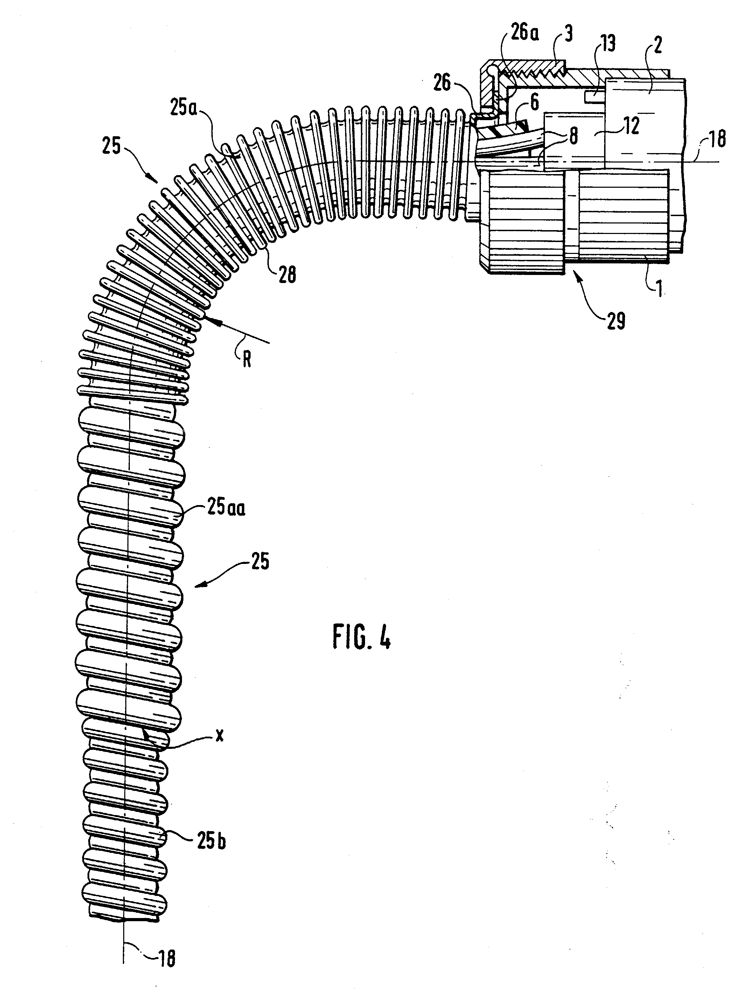

In der Fig.4 wird die Lösung nach Fig.3 ohne glatte Buchse 27a im Fixierbereich gezeigt. Das Fixieren des (hier nicht gezeigten) Metallgeflechtes 5a erfolgt direkt auf dem verschraubten Ende des leitfähigen Wellschlauches. Die Verschraubung der gestreckte Zone 25aa des Wellschlauches mit dem Kunststoffschlauch 25b erfolgt an der Verbundstelle x in der bereits beschriebenen Weise. Die Materialwahl des letztgenannten Wellschlauches 25b zugunsten des Kunststoffes wird mit der Gewährleistung des mechanischen Schutzes, insbesondere des Scheuerschutzes, für in ihm befindliche Leitungen oder Kabel oder Kabelbäume begründet.

Im leitfähigen Bereich des Richtungschlauches 25 werden - grundsätzlich bei allen beispielgemäßen Ausführungsformen - die isolierten elektrischen Leitungen 8 oder Kabel oder Kabelbäume von dem kunststoffartigen Geflecht 6 umhüllt, das sie gegen Scheuerwirkungen schützt.

Die Ausführungsformen gewähren im Flugzeug die Installation des beispielgemäßen Anschlußelementes 29.

Derartig gestaltete Anordnungen realisieren ebenso einen wirksamen mechanischen Schutz gegen äußere mechanische und elektrische Beanspruchungen, insbesondere den Schutz gegen elektromagnetische Störungen, insbesondere bei Blitzschlag, und elektromagnetische Beeinträchtigungen durch fremde Bordsysteme. Der lösungsgemäße biegesteife und richtungsveränderliche Richtungsschlauch 25 als leitfähiger Wellschlauch mit seinen beiden Zonen 25a, 25aa gestattet seine Verlegung und damit auch die mit ihm geschützte Verlegung von Leitungen 8 oder Kabel oder Kabelbaum auf engstem Raum bzw. innerhalb eines beengten Installationsbereiches gerade oder im Winkel ohne Querschnittsschwächung.

### Bezugszeichen

- 1: Aufschraubteil; metallisch, elektrisch leitfähig
- 2: Steckverbinder
- 3: Überwurfmutter, metallisch, elektrisch leitfähig
- 4: Spannhülse, geschlitzt, elektrisch leitfähig
- 5, 5a: Schlauch, geflechtartig, elektrisch leitfähig
- 6: Schlauch, geflechtartig, kunststoffartig, elektrisch nicht leitfähig
- 7: Fixiermittel, elektrisch nicht leitfähig
- 8: Leitung, isoliert, elektrisch leitfähig
- 10: Spannschloß
- 11: Spannelement; Spannband
- 17: Konus, keilförmig
- 18: Mittelachse
- 25: Richtungsschlauch
- 25a: Zone, gestaucht
- 25aa: Zone, gestreckt
- 25b: Anschlußschlauch
- 26: Anschlußende, glatt
- 26a: Flansch, angesetzt
- 27, 27a: Buchse, glatt
- 27b: Stützbuchse, glatt
- 28: Rundung
- 29: Anschlußelement
- R: Radius
- x: Verbundstelle; Kopplungsstelle

## Patentansprüche

1. Anschlußelement zur variablen Verlegung und zum Schutz von Leitungen in Luft- und Raumfahrzeugen, das sich aus einem Aufschraubteil (1) mit einer aufschraubbaren Überwurfmutter (3) und einem Schutzschlauch, der am Aufschraubteil (1) fixiert ist, zusammensetzt, bei dem isolierte elektrische Leitungen (8) durch den Schutzschlauch geführt sind, wobei die Leitungen (8) entlang einer Mittelachse (18) des Anschlußelements (29) angeordnet sind, bei der der Schutzschlauch zur richtungsgebenden Führung als Richtungsschlauch (25) angeordnet und mit einer Flugzeugstruktur verbunden ist,
**gekennzeichnet dadurch**, daß der als Richtungsschlauch (25) bezeichnete Teil des Anschlußelements (29) als biegesteifer Wellschlauch ausgeführt ist, der mindestens eine gestauchte Zone (25a) kleiner Wellenteilung besitzt und an dessen einem Ende (26) ein Flansch (26a) zur Fixierung am Aufschraubteil (1) mittels Überwurfmutter (3) vorhanden ist.

2. Anordnung nach Anspruch 1, **gekennzeichnet dadurch**, daß das andere Ende (26) des Wellschlauches zu einer glatten Buchse (27) geformt ist.

3. Anordnung nach Anspruch 1, **gekennzeichnet dadurch**, daß der Wellschlauch aus der Kombination seiner gestauchten Zone (25a) und einer ihr nachgeordneten gestreckten Zone (25aa), die eine große Wellenteilung besitzt, zusammengesetzt ist, wobei ein nahtloser Übergang zwischen den Zonen erfolgt.

4. Anordnung nach Anspruch 1, **gekennzeichnet dadurch**, daß das andere Ende des Wellschlauches mit unterschiedlichen Anschlußschläuchen (25b) als leitfähige kunststoffartige und / oder metallene Wellschläuche verbunden ist.

5. Anordnung nach den Ansprüchen 1 und 4, **gekennzeichnet dadurch**, daß das andere Ende des Wellschlauches mit einem Anschlußschlauch (25b) als Wendelwellschlauch verschraubbar ist, wobei letzterer innerhalb des kreisflächigen Hohlraumquerschnittes des Wellschlauches einschraubbar oder außerhalb des kreisförmigen Querschnittes des Wellschlauches auf dessen Mantelfläche aufschraubbar ist.

6. Anordnung nach Anspruch 5, **gekennzeichnet dadurch**, daß der Wendelwellschlauch vorzugsweise nicht leitfähig ist und aus Kunststoff besteht, der als Scheuerschutz gegenüber den Leitungen (8) vorgesehen ist.

7. Anordnung nach den Ansprüchen 1 und 3 bis 5, **gekennzeichnet dadurch**, daß die gestreckte Zone (25aa) eine Streckung besitzt, mit der die gleiche Wellenteilung des Anschlußschlauches (25b) realisiert ist.

8. Anordnung nach den Ansprüchen 1 bis 3, **gekennzeichnet dadurch**, daß am freien Ende der gestreckten Zone (25aa) an der Manteloberfläche des Wellschlauches eine glatte Buchse (27a) fest angeformt oder das freie Ende zu einer glatten Buchse (27a) geformt ist.

9. Anordnung nach Anspruch 1, **gekennzeichnet dadurch**, daß der als Richtungsschlauch (25) bezeichnete Teil des Anschlußelementes (29) vorzugsweise als leitfähiger Wellschlauch ausgeführt ist und im gebogenen Zustand einen Rohrkrümmer bildet, der verschiedene Anwendungswinkel, die vorzugsweise im Winkelbereich zwischen 0 Grad und 180 Grad liegen, einnimmt.

10. Anordnung nach Anspruch 1, **gekennzeichnet dadurch**, daß der Wellschlauch als Wendelwellschlauch oder Ringwellschlauch realisiert ist, wobei beide Schläuche eine fest angeformte glatte Buchse (27a) am anderen Ende aufweisen.

## Claims

1. Connecting element for the variable installation and protection of cables in aircraft and space vehicles, composed of a screw-on part (1) with a screwable screw cap (3) and a protective hose, which is fixed on the screw-on part (1), in which insulated electrical cables (8) are routed through the protective hose, the cables (8) being disposed along a centre line (18) of the connecting element (29), with regard to which the protective hose is disposed for directional routing as a directional hose (25) and connected to an aircraft structure, characterized in that the part of the connecting element (29) described as a directional hose (25) is designed as a deflection-resistant corrugated hose, which has at least one compressed zone (25a) of a small corrugation pitch and at one end (26) of which a flange (26a) is present for fixing on the screw-on part (1) by means of a screw cap (3).

2. Arrangement according to claim 1, characterized in that the other end (26) of the corrugated hose is formed into a smooth bush (27).

3. Arrangement according to claim 1, characterized in that the corrugated hose is composed of the combination of its compressed zone (25a) and a stretched zone (25aa) arranged after this which has a large corrugation pitch, a seamless transition being effected between the zones.

4. Arrangement according to claim 1, characterized in that the other end of the corrugated hose is connected to different connecting hoses (25b) as conductive corrugated hoses of a synthetic material type and / or metal.

5. Arrangement according to claims 1 and 4, characterized in that the other end of the corrugated hose is screwable to a connecting hose (25b) as a helical corrugated hose, the latter being screwable inside the circular hollow cross-section of the corrugated hose or outside the circular cross-section of the corrugated hose on its surface area.

6. Arrangement according to claim 5, characterized in that the helical corrugated hose is preferably not conductive and consists of synthetic material, which is provided as chafe protection in relation to the cables (8).

7. Arrangement according to claims 1 and 3 to 5, characterized in that the stretched zone (25aa) has an extension with which the identical corrugation pitch of the connecting hose (25b) is realized.

8. Arrangement according to claims 1 to 3, characterized in that formed fixedly on the free end of the stretched zone (25aa) on the surface area of the corrugated hose is a smooth bush (27a), or the free end is formed into a smooth bush (27a).

9. Arrangement according to claim 1, characterized in that the part of the connecting element (29) described as a directional hose (25) is designed preferably as a conductive corrugated hose and in the bent state forms a pipe elbow, which assumes various application angles, which lie preferably in the angle range between 0 degrees and 180 degrees.

10. Arrangement according to claim 1, characterized in that the corrugated hose is realized as a helical corrugated hose or annular corrugated hose, both hoses having a smooth bush (27a) formed on fixedly at the other end.

## Revendications

1. Elément de connexion destiné à la pose sous une forme variable et à la protection de conduites dans des aéronefs et des astronefs, qui se compose d'un élément à filet extérieur (1) pourvu d'un écrou-raccord (3) pouvant être vissé et d'une gaine de protection fixée sur l'élément à filet extérieur (1), dans lequel des conduites électriques isolées (8) sont guidées par l'intermédiaire de la gaine de protection, les conduites (8) étant disposées le long d'un axe médian (18) de l'élément de connexion (29), dans lequel la gaine de protection pour le guidage directionnel est disposée comme tuyau directionnel (25) et est connectée à une structure d'avion,
caractérisé en ce que la partie désignée comme tuyau directionnel (25) de l'élément de connexion (29) est conçue comme un tuyau ondulé résistant à la flexion, qui présente au moins une zone pliée (25a) avec une petite ondulation et sur une extrémité (26) duquel se trouve une flasque (26a) destinée à la fixation sur la partie vissée (1) au moyen de l'écrou-raccord (3).

2. Dispositif suivant la revendication 1, caractérisé en ce que l'autre extrémité (26) du tuyau ondulé est formée en une douille lisse (27).

3. Dispositif suivant la revendication 1, caractérisé en ce que le tuyau ondulé est formé par la combinaison de sa zone pliée (25a) et d'une zone droite (25aa) disposée en aval de celle-ci, qui possède une grande ondulation, une jonction sans soudure existant entre les deux zones.

4. Dispositif suivant la revendication 1, caractérisé en ce que l'autre extrémité du tuyau ondulé est connectée à différents tuyaux de connexion (25b) tels que des tuyaux ondulés conducteurs en plastique et/ou métalliques.

5. Dispositif suivant les revendications 1 et 4, caractérisé en ce que l'autre extrémité du tuyau ondulé peut être vissée sur un tuyau de connexion (25b) comme tuyau ondulé hélicoïdal, ce dernier pouvant être vissé dans la section transversale creuse circulaire du tuyau ondulé ou vissé à l'extérieur de la section transversale circulaire du tuyau ondulé sur la surface extérieure de celui-ci.

6. Dispositif suivant la revendication 5, caractérisé en ce que le tuyau ondulé hélicoïdal est préférentiellement isolant et se compose de plastique, qui est prévu comme protection contre l'abrasion pour les conduites (8).

7. Dispositif suivant les revendications 1 et 3 à 5, caractérisé en ce que la zone droite (25aa) présente une extension ayant la même ondulation que le tuyau de connexion (25b).

8. Dispositif suivant les revendications 1 à 3, caractérisé en ce que sur l'extrémité libre de la zone droite (25aa) sur la surface extérieure du tuyau ondulé est fixée une douille lisse (27a) ou en ce que l'extrémité libre est formée en une douille lisse (27a).

9. Dispositif suivant la revendication 1, caractérisé en ce que la partie décrite comme tuyau directionnel (25) de l'élément de connexion (29) est préférentiellement conçue comme un tuyau ondulé conducteur et forme, lorsqu'elle est pliée, un raccord coudé, qui adopte différents angles d'utilisation qui se situent préférentiellement entre 0 et 180°.

10. Dispositif suivant la revendication 1, caractérisé en ce que le tuyau ondulé est réalisé comme un tuyau ondulé hélicoïdal ou annulaire, les deux formes de tuyaux présentant une douille lisse (27a) formée et fixée sur l'autre extrémité.
